# EUROPEAN PATENT SPECIFICATION

(11) **EP 3 438 602 B1**
(45) Date of publication and mention of the grant of the patent: **11.05.2022**
(21) Application number: 18187182.3
(22) Date of filing: 03.08.2018
(51) Int. Cl.: G01B 11/02, G01B 11/00

(54) **DIMENSION MEASUREMENT APPARATUS AND CONTROL METHOD OF THE SAME**
DIMENSIONSMESSVORRICHTUNG UND KONTROLLVERFAHREN FÜR DIESELBE
APPAREIL DE MESURE DE DIMENSIONS ET PROCÉDÉ POUR CONTRÔLER CELUI-CI

(30) Priority: 03.08.2017 JP 2017150754
(43) Date of publication of application: 06.02.2019
(73) Proprietor: Toshiba TEC Kabushiki Kaisha, Tokyo 141-8562 (JP)
(72) Inventor: OKAMURA, Atsushi, Shinagawa-ku, Tokyo 141-8562 (JP)
(74) Representative: Bandpay & Greuter

(56) References cited:
- WO-A1-2017/110071
- DE-A1-102004 049 482
- US-A1- 2010 290 665
- US-A1- 2013 121 564
- US-B1- 6 614 928

## Description

### FIELD

Embodiments described herein relate generally to a dimension measurement apparatus and a control method of the same.

### BACKGROUND

At the time of accepting a transportation object in a home delivery business or the like, a work is performed in which a weight of the transportation object is measured by a scale, dimensions of a length, a width and a height of the transportation object are respectively measured by a tape measure or the like, and a transportation charge is determined based on the combination of the measured weight and dimensions. For the reason, a home delivery agent has to separately perform the dimension measurement and the weight measurement to the transportation object, and thereby there was a problem that the working efficiency is not good.

In contrast, an apparatus which photographs a transportation object using a distance image sensor (camera) to acquire a distance image, and measures dimensions of the transportation object based on the acquired distance image is thought of. It is possible to reduce a work to manually measure dimensions and a weight of the transportation object by using the apparatus like this. US 2010/290665 A1, US 6614928 B1, DE 102004049482 A1, US 2013/121564 A1, and WO 2017/110071 A1 disclose an apparatus and a method to measure dimensions of an object.

On the other hand, it is necessary to complete the measurement quickly and accurately at the time of measuring dimensions of a transportation object at a transportation object acceptance site. However, in order to enable the quick and accurate measurement, an arithmetic unit with high processing performance is necessitated for the dimension measurement based on the distance image, and thereby an installation cost might be increased. Accordingly, it is desired to reduce a processing load for the dimension measurement based on the distance image so that the measurement can be completed quickly and accurately without increasing the installation cost.

### SUMMARY OF INVENTION

The above-cited problem is solved according to the invention by an apparatus according to claim 1 and a method according to claim 5. There is provided a dimension measurement apparatus, comprising:
a camera which photographs an object to be measured to generate a distance image of the object to be measured; and
a processing device which generates dimension data indicating a length, a width, and a height of the object to be measured, based on the distance image generated by the camera;
the processing device having a memory to store a control program for generating the dimension data and a controller;
the controller executing the control program,
to acquire the distance image of the object to be measured, whereby the distance image generated by the camera is expressed by point group data including positions of respective pixels in an XYZ coordinate space such that the distance image is an XYZ-coordinate image,
to divide the acquired distance image into an X coordinate image, a Y coordinate image, and a Z coordinate image in a three-dimensional space,
to remove a coordinate point not corresponding to one reference surface of the object to be measured, in the respective divided X coordinate image, Y coordinate image, and Z coordinate image, to generate an X coordinate image of the reference surface, a Y coordinate image of the reference surface, and a Z coordinate image of the reference surface, and
to generate the dimension data indicating the length, the width, and the height of the object to be measured, based on the respective detected coordinate images of the reference surface;
the controller performs an X coordinate image processing which removes an X coordinate point in a range not corresponding to the reference surface from the divided X coordinate image, to generate the X coordinate image of the reference surface;
the controller performs a Y coordinate image processing which removes a Y coordinate point in a range not corresponding to the reference surface from the divided Y coordinate image, to generate the Y coordinate image of the reference surface; and
the controller performs a Z coordinate image processing which removes a Z coordinate point in a range not corresponding to the reference surface from the divided Z coordinate image, to generate the Z coordinate image of the reference surface.

Preferably, the controller removes a pixel position of a coordinate point ,which has been removed in any one of the X coordinate image processing, the Y coordinate image processing, and the coordinate image processing, from the other two coordinate images and thereby makes the pixel position not subject to the other two of the coordinate image processings.

Preferably, the controller may generate the dimension data indicating the height of the object to be measured, based on a histogram of a Z coordinate value based on the Z coordinate image of the reference surface.

Preferably the dimension measurement apparatus may further comprise:
a weight measurement device which measures a weight of the object to be measured to generate weight data;
wherein the controller may input the weight data of the object to be measured which has been generated by the weight measurement device, and calculate a transportation charge of the object to be measured, based on the dimension data and the weight data of the object to be measured.

In another exemplary embodiment, there is also provided a control method of a dimension measurement apparatus having a camera which photographs an object to be measured to generate a distance image of the object to be measured, comprising:
acquiring the distance image of the object to be measured which has been generated by the camera, whereby the distance image generated by the camera is expressed by point group data including positions of respective pixels in an XYZ coordinate space such that the distance image is an XYZ-coordinate image;
dividing the acquired distance image into an X coordinate image, a Y coordinate image, and a Z coordinate image in a three-dimensional space;
removing a coordinate point not corresponding to one reference surface of the object to be measured, in the respective divided X coordinate image, Y coordinate image, and Z coordinate image, generating an X coordinate image of the reference surface, a Y coordinate image of the reference surface, and a Z coordinate image of the reference surface; and
generating dimension data indicating a length, a width, and a height of the object to be measured, based on the respective detected coordinate images of the reference surface;
the generation of the X coordinate image of the reference surface includes to perform an X coordinate image processing which removes an X coordinate point in a range not corresponding to the reference surface from the divided X coordinate image, to generate the X coordinate image of the reference surface;
the generation of the Y coordinate image of the reference surface includes to perform a Y coordinate image processing which removes a Y coordinate point in a range not corresponding to the reference surface from the divided Y coordinate image, to generate the Y coordinate image of the reference surface; and
the generation of the Z coordinate image of the reference surface includes to perform a Z coordinate image processing which removes a Z coordinate point in a range not corresponding to the reference surface from the divided Z coordinate image, to generate the Z coordinate image of the reference surface.

Preferably, the generation of each of the coordinate images of the reference surface may include, removing a pixel position of a coordinate point , which has been removed in any one of the X coordinate image processing, the Y coordinate image processing, and the Z coordinate image processing, from the other two coordinate images and thereby making the pixel position not subject to the other two of the coordinate image processings.

Preferably, the generation of the dimension data may include to generate the dimension data indicating the height of the object to be measured, based on a histogram of a Z coordinate value based on the Z coordinate image of the reference surface.

The control method of a dimension measurement apparatus may further comprise:
inputting weight data of the object to be measured which has been generated by a weight measurement device to measure a weight of the object to be measured; and
calculating a transportation charge of the object to be measured, based on the dimension data and the weight data of the object to be measured.

### BRIEF DESCRIPTION OF THE DRAWINGS

The above and other objects, features and advantages of the present invention will be made apparent from the following description of the preferred embodiments, given as nonlimiting examples, with reference to the accompanying drawings, in which:
Fig. 1 is a diagram showing an outer appearance of a dimension measurement apparatus according to an embodiment.
Fig. 2 is a block diagram showing a configuration of the dimension measurement apparatus according to the embodiment.
Fig. 3 is a block diagram showing a configuration of the processing device according to the embodiment.
Fig. 4 is a block diagram showing function modules to be realized by a dimension measurement program according to the embodiment.
Fig. 5 is a block diagram for describing the image processing module according to the embodiment.
Fig. 6 is a block diagram for describing the dimension data generation module according to the embodiment.
Fig. 7 is a diagram showing a position relation of the camera and the transportation object according to the embodiment.
Fig. 8 is a diagram showing a photographable range of the camera according to the embodiment.
Fig. 9 is a diagram in which the distance image according to the embodiment obtained by photographing the transportation object by the camera is expressed in an XYZ coordinate space.
Fig. 10 is a diagram for describing the closing processing according to the embodiment.
Fig. 11 is a diagram conceptually showing a rectangular solid having an upper surface which an upper surface 3D model indicates, based on the upper surface 3D model which the 3D modeling module according to the embodiment has generated.
Fig. 12 is a diagram showing a maximum value and a minimum value of a peak zone of a histogram distribution of the upper surface Z coordinate image which the histogram distribution generation module according to the embodiment has generated.

### DETAILED DESCRIPTION

According to one embodiment, a dimension measurement apparatus has a camera and a processing device. The camera photographs an object to be measured to generate a distance image of the object to be measured. The processing device has a memory and a controller so that the processing device generates dimension data indicating a length, a width, and a height of the object to be measured based on the distance image generated by the camera. The memory stores a control program for generating the dimension data. The controller acquires the distance image of the object to be measured. The controller divides the acquired distance image into an X coordinate image, a Y coordinate image, and a Z coordinate image in a three-dimensional space. The controller removes a coordinate point not corresponding to one reference surface of the object to be measured, in the respective divided X coordinate image, Y coordinate image, and Z coordinate image, to detect an X coordinate image, a Y coordinate image, and a Z coordinate image of the reference surface. Further, the controller generates the dimension data indicating the length, the width, and the height of the object to be measured, based on the respective detected coordinate images of the reference surface.

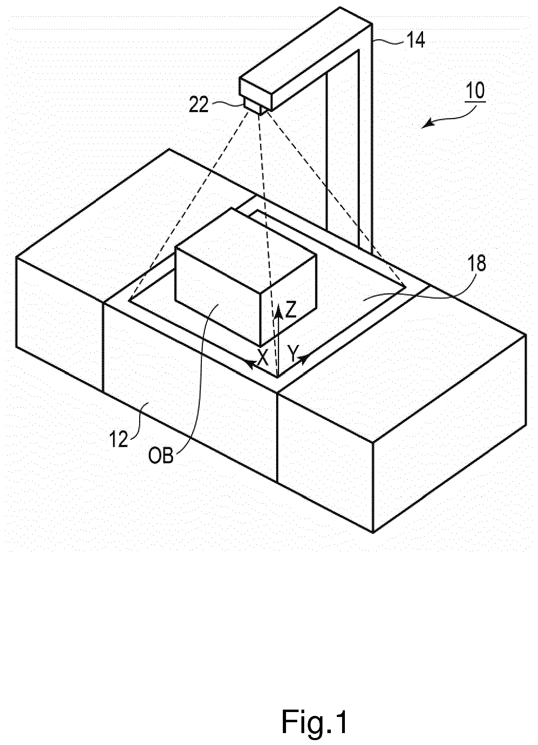

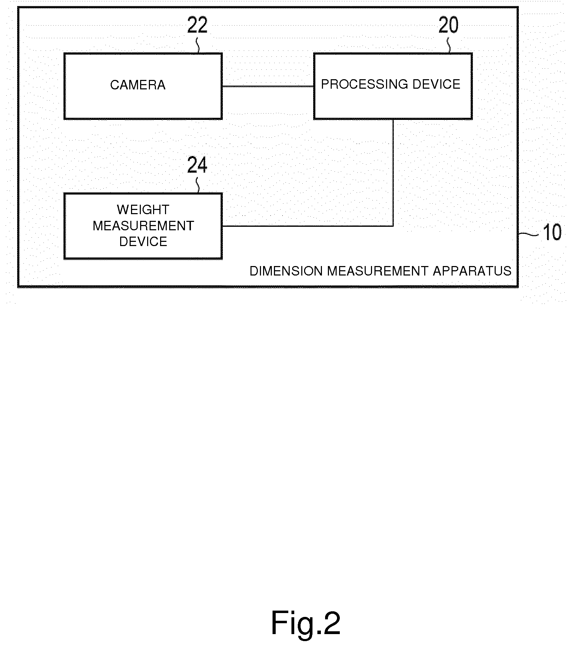

Hereinafter, the present embodiment will be described with reference to the drawings. In the drawings, the same symbols indicate the same or the similar portions. Fig. 1 is a diagram showing an outer appearance of a dimension measurement apparatus 10 according to the present embodiment. Fig. 2 is a block diagram showing a configuration of the dimension measurement apparatus 10 according to the present embodiment.

The dimension measurement apparatus 10 is installed and used at an acceptance place of a transportation object OB of a home delivery agent, for example. The dimension measurement apparatus 10 measures dimensions of a length, a width, and a height (a depth, a width, and a height), and a weight of the transportation object OB, in order to determine a transportation charge of the transportation object OB.

As shown in Fig. 1 and Fig. 2, the dimension measurement apparatus 10 has a measurement table 12, a camera 22, a weight measurement device 24, and a processing device 20. A measurement area 18 in which the transportation object OB that is an object to be measured is to be horizontally placed, for example, is provided on an upper surface of the measurement table 12. The camera 22 supported by a support member 14 is arranged above the measurement area 18. The camera 22 photographs the transportation object OB placed in the measurement area 18 from above to generate a distance image. The distance image is used in a processing to measure dimensions of the length, the width, and the height of the transportation object OB. The distance image is an image including values by which respective pixels of the image obtained by imaging the photographic subject indicate distances to the photographic subject.

The distance image generated by the camera 22 is expressed by point group data (XYZ coordinate image) including positions (XYZ coordinates) of respective pixels in an XYZ coordinate space. The XYZ coordinate space is defined by an orthogonal coordinate system using, as a reference, an origin which is set to any position within a space to be photographed by the camera 22, for example. In Fig. 1, the origin is defined to a position corresponding to one corner position of the rectangular measurement area 18, for example. An X coordinate axis and a Y coordinate axis are defined along sides of the measurement area 18. A Z coordinate axis is defined to an upward direction from the placing surface of the measurement area 18 on which the transportation object OB is to be placed. In the present embodiment, description will be made assuming that the length (depth), the width (width), and the height of the transportation object OB correspond respectively to the Y coordinate axis direction, the X coordinate axis direction, and the Z coordinate axis direction in the XYZ coordinate space.

The camera 22 may be a stereo camera to output a distance image based on parallax of the imaged images by two cameras, for example, or may be a distance image camera (sensor) of a TOF (Time Of Flight) system to measure a distance from a time required for a projected laser to reciprocate to a photographic subject. In addition, the camera 22 may be a camera to generate a distance image of another system.

In addition, the weight measurement device 24 is provided in the measurement area 18. The weight measurement device 24 measures a weight of the transportation object OB placed in the measurement area 18.

The processing device 20 inputs (acquires) the distance image (point group data) generated by the camera 22. The processing device 20 executes a dimension processing to generate dimension data indicating dimensions of the length, the width, and the height of the transportation object OB. In addition, the processing device 20 inputs the weight data measured by the weight measurement device 24. The processing device 20 executes a processing to calculate a transportation charge of the transportation object OB, using the inputted weight data and the generated dimension data.

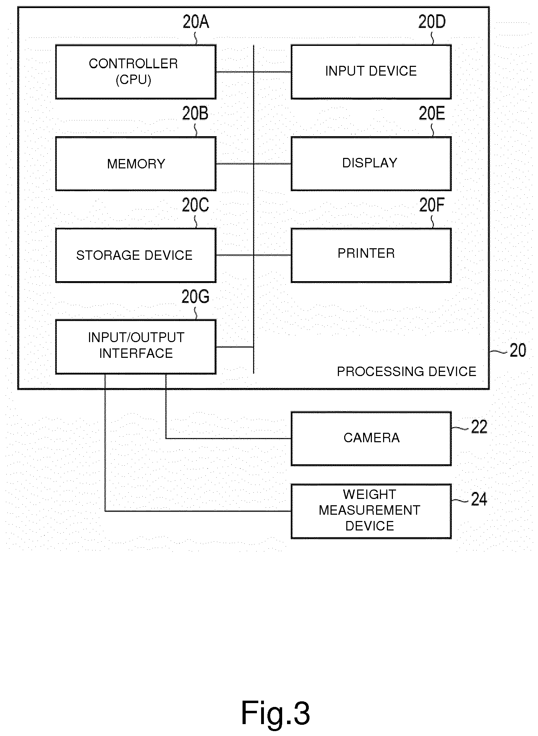

Fig. 3 is a block diagram showing the processing device 20 according to the present embodiment. The processing device 20 has a function of a computer. Specifically, the processing device 20 has a controller 20A, a memory 20B, a storage device 20C, an input device 20D, a display 20E, a printer 20F, and an input/output interface 20G.

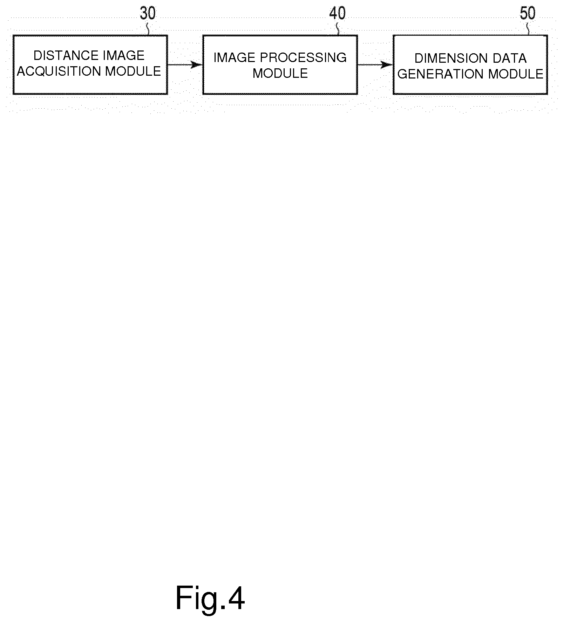

The controller 20A is a CPU (Central Processing Unit), for example. Hereinafter, the controller 20A may be called the CPU 20A. The CPU 20A executes a control program to control the whole of the dimension measurement apparatus 10. The control program includes a dimension measurement program and so on. The CPU 20A executes the dimension measurement program to realize function modules shown in a block diagram of Fig. 4. The function modules to be realized by the dimension measurement program include a distance image (point group data) acquisition module 30, an image processing module 40, and a dimension data generation module 50.

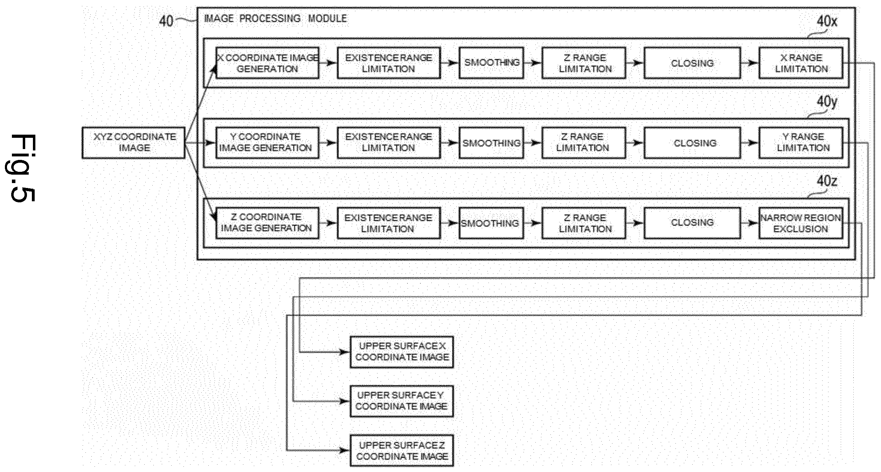

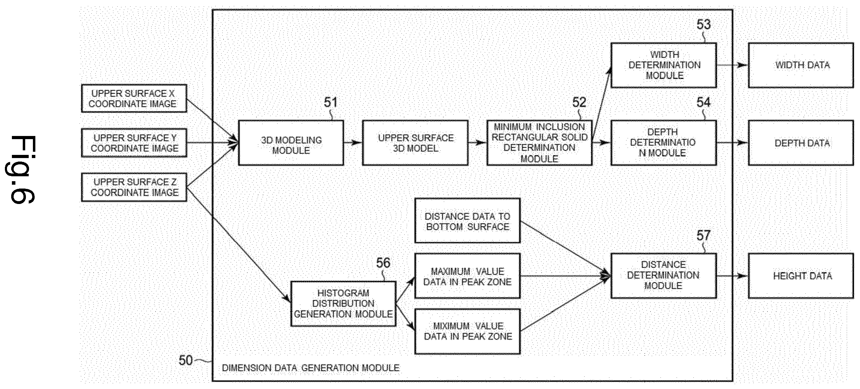

The distance image acquisition module 30 acquires the point group data (may be called the XYZ coordinate image) composed of positions (XYZ coordinates) of respective pixels in the XYZ coordinate space of the distance image of the transportation object OB photographed by the camera 22. The image processing module 40 generates an upper surface coordinate image corresponding to a reference surface of the transportation object OB, based on the distance image (XYZ coordinate image). In the present embodiment, the upper surface of the transportation object OB is made to be the reference surface. The image processing module 40 divides the distance image into an X coordinate image, a Y coordinate image, and a Z coordinate image, and removes coordinate points not corresponding to the upper surface (reference surface) of the transportation object OB in the respective coordinate images, to detect respective upper surface coordinate images corresponding to the upper surface (refer to Fig. 5). The dimension data generation module 50 generates dimension data indicating dimensions of the length, the width, and the height (depth, width, height) of the transportation object OB, based on the upper surface coordinate images (refer to Fig. 6).

The memory 20B stores various data associated with the execution of various processings, in addition to the respective control programs to be executed by the CPU 20A. The storage device 20C is a nonvolatile storage medium (a hard disk or the like), and stores various program and data.

The input device 20D inputs an instruction for controlling an operation of the dimension measurement apparatus 10. The input device 20D includes a touch panel, a keyboard, a button and so on, for example. The input device 20D detects an input of an instruction to the touch panel, the keyboard, the button and so on, and outputs (notifies) the instruction to the CPU 20A. For example, the input device 20D is installed (not shown) in the vicinity of the measurement table 12 shown in Fig. 1, and accepts an instruction of photographing start (dimension measurement start) to the transportation object OB by the camera 22.

The display 20E displays an operation state and a processing result of the dimension measurement apparatus 10 under the control of the CPU 20A. The display 20E is installed (not shown) in the vicinity of the measurement table 12, for example, and presents the operation state and the processing result to a home delivery agent (receptionist) working at the measurement table 12, or a customer. The printer 20F prints a charge and so on determined based on the measured dimensions and weight of the transportation object OB.

The input/output interface 20G is an interface to which the camera 22 and the weight measurement device 24 are to be connected. Another external device may be connected to the input/output interface 20G.

Fig. 5 is a block diagram for describing details of the image processing module 40. As shown in Fig. 5, the image processing module 40 includes an X coordinate image processing module 40x, a Y coordinate image processing module 40y, and a Z coordinate image processing module 40z.

The X coordinate image processing module 40x removes X coordinate points in the range not corresponding to the upper surface of the transportation object OB from the X coordinate image to generate an upper surface X coordinate image. The X coordinate image processing module 40x executes respective processings of an X coordinate image generation, an existence range limitation, smoothing, a Z range limitation, closing, an x range limitation, for example, to generate the upper surface X coordinate image.

The Y coordinate image processing module 40y removes Y coordinate points in the range not corresponding to the upper surface of the transportation object OB from the Y coordinate image to generate an upper surface Y coordinate image. The Y coordinate image processing module 40y executes respective processings of a Y coordinate image generation, the existence range limitation, the smoothing, the Z range limitation, the closing, a y range limitation, for example, to generate the upper surface Y coordinate image.

The Z coordinate image processing module 40z removes Z coordinate points in the range not corresponding to the upper surface of the transportation object OB from the Z coordinate image to generate an upper surface Z coordinate image. The Z coordinate image processing module 40z executes respective processings of a Z coordinate image generation, the existence range limitation, the smoothing, the Z range limitation, the closing, a narrow region exclusion, for example, to generate the upper surface Z coordinate image.

Each of the X coordinate image processing module 40x, the Y coordinate image processing module 40y, and the Z coordinate image processing module 40z limits the object to be processed to a range to be measured in the distance image generated by the camera 22 (corresponds to a range of the measurement area 18, for example), by the processing of the existence range limitation. Since each of the X coordinate image processing module 40x, the Y coordinate image processing module 40y, and the Z coordinate image processing module 40z makes, not the three-dimensional coordinate data, but only the coordinate data of the corresponding coordinate system, to be the object to be processed, the processing procedure is simplified and thereby the processing efficiency can be improved.

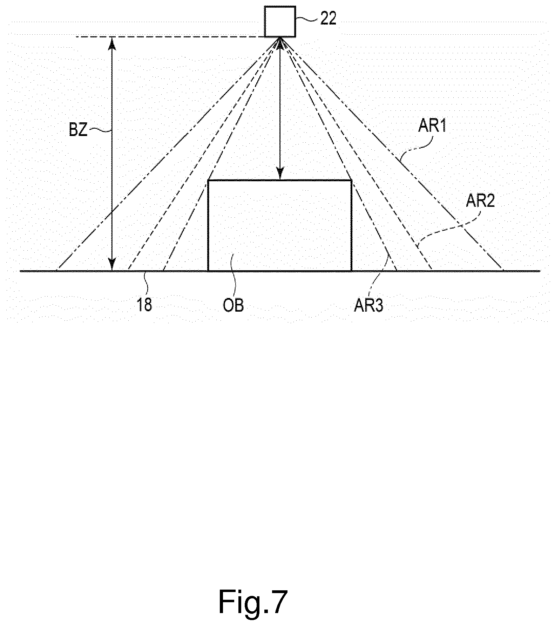

Fig. 7 is a diagram showing a position relation of the camera 22 and the transportation object OB in the present embodiment. As shown in Fig. 7, the camera 22 is arranged immediately above the measurement area 18 in which the transportation object OB is to be placed, for example, and photographs the transportation object OB. For example, a photographable range (an angle of view) by the camera 22 is made to be an area AR1, and the range to be measured (the measurement area 18) is made to be an area AR2.

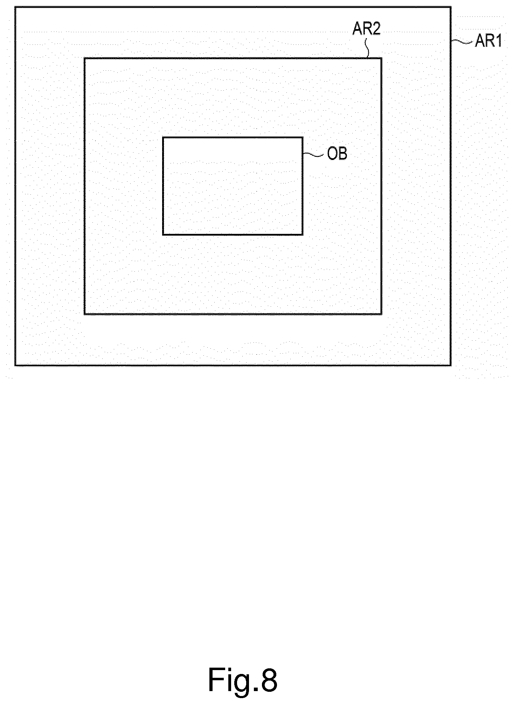

Fig. 8 shows the areas AR1, AR2 and an example of an arrangement of the transportation object OB. As shown in Fig. 8, when photographing is performed by the camera 22, a range including the area AR1 is photographed. Each of the X coordinate image processing module 40x, the Y coordinate image processing module 40y and the Z coordinate image processing module 40z limits the object to be processed to a range included in the area AR2 shown in Fig. 8, by the relevant processing of the existence range limitation. As shown in Fig. 8, when the transportation object OB is photographed in the state to be placed in the measurement area 18, the upper surface of the transportation object OB is included in the area AR2.

In addition, each of the X coordinate image processing module 40x, the Y coordinate image processing module 40y and the Z coordinate image processing module 40z limits only coordinate values of pixels having the Z coordinate values in the range capable of corresponding to the transportation object OB, as the object to be processed, by the relevant processing of the Z range limitation. For example, in the dimension measurement apparatus 10, a coordinate value of a pixel having a Z coordinate value exceeding an upper limit of the transportation object OB whose dimension is to be measured is removed as being outside the object to be processed.

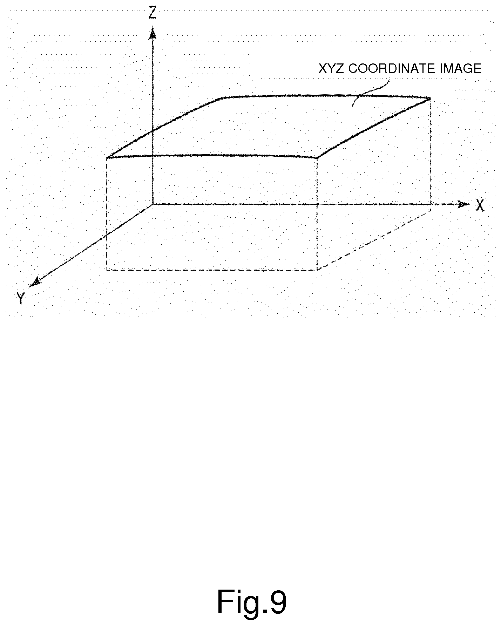

Fig. 9 is a diagram showing the distance image (XYZ coordinate image (dot group data)) generated when the camera 22 has photographed the transportation object OB in the XYZ coordinate space (three-dimensional space). In addition, setting of the origin position and definition of positive directions of the coordinate system in the XYZ coordinate space shown in Fig. 9 are examples, and other setting and definition may be used. For example, the origin position may be set to a part of the XYZ coordinate image, and the positive direction of the Z coordinate system may be defined to be a downward direction.

The X coordinate image processing module 40x, the Y coordinate image processing module 40y, and the Z coordinate image processing module 40z respectively perform the processings of the Z range limitation to the X coordinate image, the Y coordinate image, and the Z coordinate image corresponding to the XYZ coordinate image shown in Fig. 9. By this means, a coordinate value of a pixel having a Z coordinate value that is made to be outside the object to be processed is removed as being outside the object to be processed.

In addition, each of the X coordinate image processing module 40x, the Y coordinate image processing module 40y, and the Z coordinate image processing module 40z removes a trash portion in the image, such as an isolated point and a thin line in the relevant coordinate image by the closing processing.

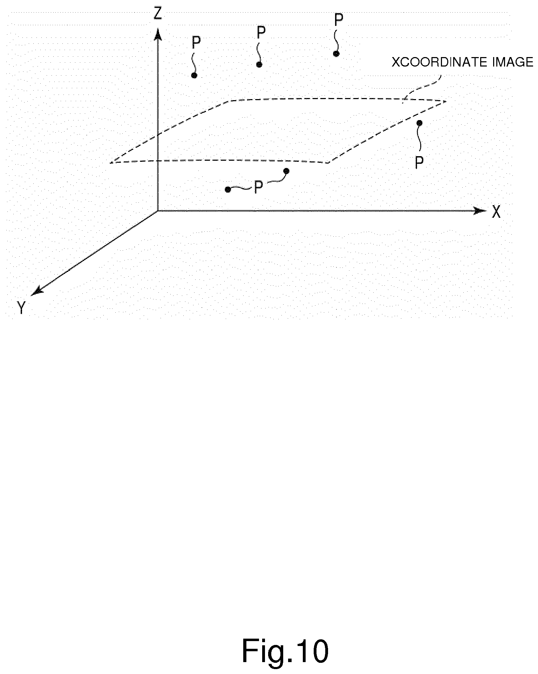

For example, the X coordinate image processing module 40x executes the closing processing to the X coordinate image shown in Fig. 10 to remove isolation point data P appearing as noise, for example, which does not correspond to the upper surface of the transportation object OB.

The X coordinate image processing module 40x limits the object to be processed to the data of the X coordinate in a range corresponding to the upper surface of the transportation object OB, by the processing of the x range limitation. In addition, the Y coordinate image processing module 40y limits the object to be processed to the data of the Y coordinate in a range corresponding to the upper surface of the transportation object OB, by the processing of the y range limitation. The Z coordinate image processing module 40z, when the Z coordinate data group (point group data) indicating a narrow region (narrow region) that is made not to correspond to a predetermined upper surface of the transportation object OB is present, removes the relevant coordinate data by the processing of the narrow region exclusion.

The image processing module 40 in the present embodiment, regarding the pixel position the coordinate point of which has been removed as being not corresponding to the upper surface in any one module of the X coordinate image processing module 40x, the Y coordinate image processing module 40y, and the Z coordinate image processing module 40z, makes the other coordinate image processing modules operate so as not to make the pixel position an object of the processing to remove the coordinate point. For example, the pixel position which has been removed by the processing based on the Z coordinate image by the Z coordinate image processing module 40z is made outside the object to be processed in the X coordinate image processing module 40x and the Y coordinate image processing module 40y, as the relevant pixel position has to be removed also in the X coordinate image and the Y coordinate image. When a coordinate value of one pixel is expressed by the XYZ coordinate, if the pixel is not discriminated as being the object to be removed in each of the X coordinate, the Y coordinate and the Z coordinate, the pixel cannot be discriminated as being the object to be removed. However, at a time point when the pixel is discriminated as being the object to be removed in any of the X coordinate, the Y coordinate and the Z coordinate, the image processing module 40 can discriminate the relevant pixel as being the object to be removed. By this means, it is possible to reduce the whole processing load in the image processing module 40.

In addition, at what timings the processings in the X coordinate image processing module 40x, the Y coordinate image processing module 40y, and the Z coordinate image processing module 40z are respectively executed is not particularly limited. For example, the processings in the X coordinate image processing module 40x, the Y coordinate image processing module 40y, and the Z coordinate image processing module 40z may be executed in series, and after the processing in the Z coordinate image processing module 40z has been executed, the processing of the X coordinate image processing module 40x and the processing of the Y coordinate image processing module 40y may be executed in parallel. In addition, when any image processing module finishes a processing in a certain stage, the processings using the result may be executed in parallel in the next image processing modules in a pipeline manner.

Fig. 6 is a block diagram for describing details of the dimension data generation module 50. As shown in Fig. 6, the dimension data generation module 50 has a 3D modeling module 51, a minimum inclusion rectangular solid determination module 52, a width determination module 53, a depth determination module 54, a histogram distribution generation module 56, and a distance determination module 57.

The 3D modeling module 51 generates an upper surface 3D model indicating the upper surface of the transportation object OB, based on the upper surface X coordinate image, the upper surface Y coordinate image, and the upper surface Z coordinate image to be obtained by the processing of the image processing module 40. The minimum inclusion rectangular solid determination module 52 discriminates a rectangular solid having the upper surface which the upper surface 3D model shows, that is, a rectangular solid indicating the upper surface of the transportation object OB photographed by the camera 22, based on the upper surface 3D model.

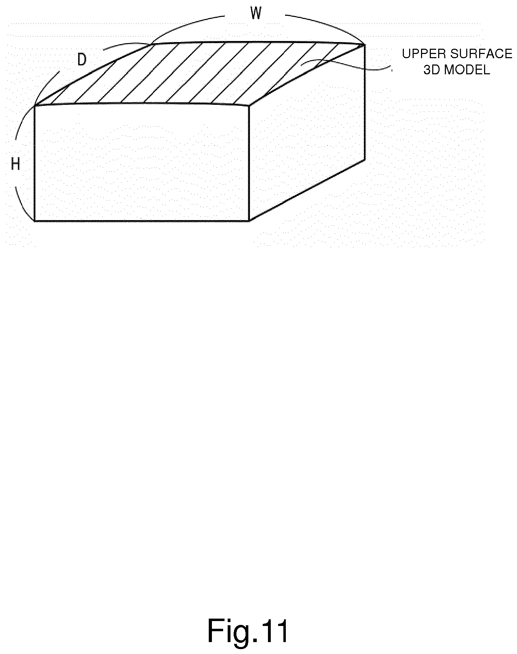

Fig. 11 is a diagram conceptually showing the rectangular solid having the upper surface which the upper surface 3D model shows. The transportation object OB is not actually a complete rectangular solid, but may be deformed, for example, the side surface or the upper surface may be expanded by a matter packed in the box, or may be dented by a weight applied from outside. In addition, there may be also a case in which an appendage is attached to the transportation object OB, for example, packing paper, an invoice, a seal or the like may be pasted, or a string for packaging may be wound. In the present embodiment, assuming that the transportation object OB in this state has a shape (an approximately rectangular solid) corresponding to a rectangular solid, a rectangular solid expressing the transportation object OB is discriminated based on the upper surface 3D model. The width determination module 53 determines a width (W) of the rectangular solid discriminated by the minimum inclusion rectangular solid determination module 52, that is, a dimension of the width of the upper surface of the transportation object OB, and outputs width data (lateral dimension data). The depth determination module 54 determines a depth (D) of the rectangular solid discriminated by the minimum inclusion rectangular solid determination module 52, that is, a dimension of the length of the upper surface of the transportation object OB, and outputs depth data (longitudinal dimension data).

The histogram distribution generation module 56 generates a histogram distribution indicating the number of pixels for each Z coordinate value, from the upper surface Z coordinate image obtained by the processing of the image processing module 40.

The distance determination module 57 determines a distance from the camera 22 to a position made to be the height of the upper surface of the transportation object OB, based on the histogram distribution of the upper surface Z coordinate image generated by the histogram distribution generation module 56, and determines a dimension of the height of the transportation object OB from the distance, and outputs height data. The distance determination module 57 determines a distance from the camera 22 to the position made to be the height of the upper surface of the transportation object OB, based on a maximum value (MaxPZ) of a peak zone of the histogram distribution of the upper surface Z coordinate image, a minimum value (MinPZ) of the peak zone of the histogram distribution of the upper surface Z coordinate image, and previously stored distance data indicating a distance from the camera 22 to the bottom surface of the transportation object OB (the upper surface of the measurement area 18).

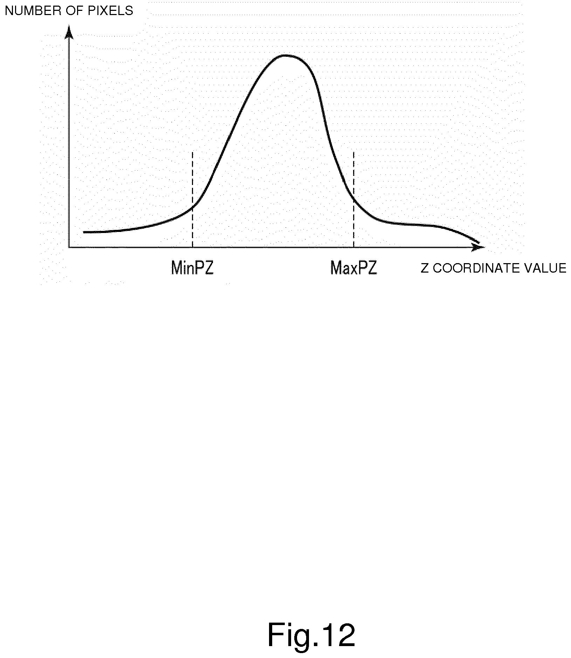

Fig. 12 is a diagram showing the maximum value (MaxPZ) and the minimum value (MinPZ) of the peak zone of the histogram distribution of the upper surface Z coordinate image.

The upper surface of the transportation object OB is not a plane due to an expansion, a dent, an appendage or the like as described above, but as shown in Fig. 12, pixels of distances included in a limited range concentrate. The distance determination module 57 determines a median, for example, to be the distance from the camera 22 to the upper surface of the transportation object OB, based on the maximum value and the minimum value of the peak zone corresponding to the limited range. The distance determination module 57 subtracts the distance determined based on the histogram distribution from a predetermined distance BZ from the camera 22 to the measurement area 18 (the placing surface of the transportation object OB) to calculate a distance corresponding to the height of the transportation object OB. The distance determination module 57 outputs height data in accordance with the distance corresponding to a height (H) of the transportation object OB.

Next, an operation of the dimension measurement apparatus 10 in the present embodiment will be described. For example, in order to determine a transportation charge of the transportation object OB, a dimension measurement and a weight measurement of the transportation object OB are performed using the dimension measurement apparatus 10. The transportation object OB is placed inside the measurement area 18 which is provided on the upper surface of the measurement table 12. Here, a dimension measurement start is instructed by an operation to the input device 20D, the processing device 20 instructs the camera 22 to photograph the transportation object OB, and instructs the weight measurement device 24 to execute the weight measurement.

The processing device 20 inputs the distance image (dot group data) generated by the camera 22, and in the image processing module 40, divides the distance image into the X coordinate image, the Y coordinate image, and the Z coordinate image, removes coordinate points not corresponding to the upper surface (reference surface) of the transportation object OB in the respective divided coordinate images, and thereby executes the processing to detect the respective upper surface coordinate images corresponding to the upper surface. The dimension data generation module 50 outputs the width data (lateral dimension data), the depth data (longitudinal dimension data), and the height data, as described above, by the processing based on the result of image processing by the image processing module 40.

The processing device 20 calculates a transportation charge, based on a sum of the dimensions of the length, the width, and the height of the transportation object OB which the data outputted by the dimension data generation module 50 indicates, the weight of the transportation object OB which the weight data to be inputted from the weight measurement device 24 indicates, a delivery destination (transportation distance) which is separately inputted through the input device 20D and so on, and a transportation mode (service contents). The calculated transportation charge is printed on a prescribed position of an invoice by the printer 20F, for example.

Since in the dimension measurement apparatus 10 in the present embodiment, the dimension measurement and the weight measurement are concurrently performed to the transportation object OB placed in the measurement area 18 in this manner, a working load for determining the transportation charge can be reduced. In the dimension measurement, the shape of the transportation object OB is specified and the dimension of the transportation object OB is measured, by only the distance image obtained by photographing the upper surface of the transportation object OB, and accordingly, the dimension can be measured simply and with high accuracy, without photographing the transportation object OB for a plural number of times while changing a position and an angle.

In addition, in the processing in the processing device 20, the distance image of the upper surface is divided into the X coordinate image, the Y coordinate image, and the Z coordinate image, and the processings are individually performed to the respective divided coordinate images, and thereby the processing load of the dimension measurement based on the distance image can be reduced. Accordingly, since an arithmetic unit with a high processing performance is not necessitated, increase in cost of the dimension measurement apparatus 10 can be avoided.

In addition, in the above-described description, the camera 22 is provided at a position immediately above the measurement area 18, but since at least the upper surface (reference surface) of the transportation object OB can only be photographed by the camera 22, the upper surface of the transportation object OB may be photographed obliquely from above, for example.

Further, in the above-described description, the camera 22 is installed above the measurement area 18, and thereby the distance image using the upper surface of the transportation object OB (the object to be measured) as the reference surface is acquired, but the transportation object OB is photographed from the lateral direction or from the downward direction of the transportation object OB, and thereby the distance image using the side surface or the bottom surface as the reference surface may be acquired. In this case, the camera 22 is installed at a position where the side surface or the bottom surface of the transportation object OB becomes photographable, and the transportation object OB is photographed from the lateral direction or the downward direction. In addition, when the transportation object OB is photographed from the lateral direction, the transportation object OB is placed in the measurement area 18, while a side surface opposite to a surface of the transportation object OB to be photographed is matched to a reference position (a wall formed vertically on the measurement area 18, for example). In addition, data indicating a distance from the camera 22 to the reference position (data corresponding to the above-described distance data BZ from the camera 22 to the bottom surface) is to be previously stored in the same manner as the above-described case in which the measurement area 18 is installed on the measurement table 12. Similarly, when the transportation object OB is photographed from the downward direction, data indicating a distance from the camera 22 provided below the measurement area 18 to the upper surface of the transportation object OB is to be previously stored (in this case, the placing surface of the measurement area 18 is to be formed of a transparent member).

In addition, in the above-described description, the dimension data of the transportation object OB is generated based on the distance image of one reference surface which has been acquired by photographing the transportation object OB from one direction, but the dimension data may be generated based on the distance images of a plurality of the reference surfaces photographed from a plurality of directions (the distance images obtained by photographing the upper surface and the side surface of the transportation object OB, for example). For example, an average value of the dimension data generated based on the respective distance images may be made to be final dimension data, or any effective dimension data may be selected. By this means, it becomes possible to generate the dimension data with higher accuracy.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention, since the full scope of the present invention is only defined by the appended claims.

## Claims

1. A dimension measurement apparatus (10), comprising:
a camera (22) configured to photograph an object to be measured to generate a distance image of the object to be measured; and
a processing device (20) configured to generate dimension data indicating a length, a width, and a height of the object to be measured, based on the distance image generated by the camera;
the processing device having a memory to store a control program for generating the dimension data and a controller;
the controller executing the control program,
to acquire the distance image of the object to be measured, whereby the distance image generated by the camera is expressed by point group data including positions of respective pixels in a three-dimensional
XYZ coordinate space such that the distance image is an XYZ-coordinate image,
**characterized in**
the controller further executing the control program, to divide the acquired distance image into an X coordinate image, a Y coordinate image, and a Z coordinate image ,
to remove coordinate points not corresponding to a reference surface of the object to be measured, in the respective divided X coordinate image, Y coordinate image, and Z coordinate image, to generate an X coordinate image of the reference surface, a Y coordinate image of the reference surface, and a Z coordinate image of the reference surface, and
to generate the dimension data indicating the length, the width, and the height of the object to be measured, based on the respective generated coordinate images of the reference surface;
whereby the controller performs an X coordinate image processing which removes X coordinate points in a range not corresponding to the reference surface from the divided X coordinate image, to generate the X coordinate image of the reference surface;
the controller performs a Y coordinate image processing which removes Y coordinate points in a range not corresponding to the reference surface from the divided Y coordinate image, to generate the Y coordinate image of the reference surface; and
the controller performs a Z coordinate image processing which removes coordinate points in a range not corresponding to the reference surface from the divided Z coordinate image, to generate the Z coordinate image of the reference surface.

2. The dimension measurement apparatus according to Claim 1, wherein the controller removes the pixel position of a coordinate point , which has been removed in any one of the X coordinate image processing, the Y coordinate image processing, and the Z coordinate image processing, from the other two coordinate images and thereby makes the pixel position not subject to the other two of the coordinate image processings.

3. The dimension measurement apparatus according to Claim 1 or 2, wherein the controller generates the dimension data indicating the height of the object to be measured, based on a histogram of a Z coordinate value based on the Z coordinate image of the reference surface.

4. The dimension measurement apparatus according to any one of Claims 1 to 3, further comprising:
a weight measurement device (24) configured to measure a weight of the object to be measured to generate weight data;
wherein the controller inputs the weight data of the object to be measured which has been generated by the weight measurement device, and calculates a transportation charge of the object to be measured, based on the dimension data and the weight data of the object to be measured.

5. A control method of a dimension measurement apparatus (10) having a camera (22) which photographs an object to be measured to generate a distance image of the object to be measured, comprising:
acquiring the distance image of the object to be measured which has been generated by the camera, whereby the distance image generated by the camera is expressed by point group data including positions of respective pixels in a three-dimensional XYZ coordinate space such that the distance image is an XYZ-coordinate image;
**characterized in**
dividing dividing the acquired distance image into an X coordinate image, a Y coordinate image, and a coordinate image ;
removingacoordinate points not corresponding to a reference surface of the object to be measured, in the respective divided X coordinate image, Y coordinate image, and Z coordinate image, thereby generating an X coordinate image of the reference surface, a Y coordinate image of the reference surface, and a Z coordinate image of the reference surface; and
generating dimension data indicating a length, a width, and a height of the object to be measured, based on the respective generated coordinate images of the reference surface;
whereby the
generation of the X coordinate image of the reference surface includes to perform an X coordinate image processing which removes X coordinate points in a range not corresponding to the reference surface from the divided X coordinate image, to generate the X coordinate image of the reference surface;
the generation of the Y coordinate image of the reference surface includes to perform a Y coordinate image processing which removes Y coordinate points in a range not corresponding to the reference surface from the divided Y coordinate image, to generate the Y coordinate image of the reference surface; and
the generation of the Z coordinate image of the reference surface includes to perform a Z coordinate image processing which removes Z coordinate points in a range not corresponding to the reference surface from the divided Z coordinate image, to generate the Z coordinate image of the reference surface.

6. The control method of a dimension measurement apparatus according to Claim 5, wherein the generation of each of the coordinate images of the reference surface includes, removing the pixel position of a coordinate point, which has been removed in any one of the X coordinate image processing, the Y coordinate image processing, and the Z coordinate image processing, from the other two coordinate images and thereby making the pixel position not subject to the other two of the coordinate image processings.

7. The control method of a dimension measurement apparatus according to Claim 5 or 6, wherein the generation of the dimension data includes to generate the dimension data indicating the height of the object to be measured, based on a histogram of a Z coordinate value based on the Z coordinate image of the reference surface.

8. The control method of a dimension measurement apparatus according to any one of Claims 5 to 7, further comprising:
inputting weight data of the object to be measured which has been generated by a weight measurement device (24) to measure a weight of the object to be measured; and
calculating a transportation charge of the object to be measured, based on the dimension data and the weight data of the object to be measured.

## Patentansprüche

1. Dimensionsmessvorrichtung (10), Folgendes umfassend:
eine Kamera (22), die dafür konfiguriert ist, ein zu vermessendes Objekt zu fotografieren, um ein Distanzbild des zu vermessenden Objekts zu erzeugen, und
eine Verarbeitungseinrichtung (20), die dafür konfiguriert ist, Dimensionsdaten zu erzeugen, die basierend auf dem von der Kamera erzeugten Distanzbild eine Länge, eine Breite und eine Höhe des zu vermessenden Objekts angeben,
wobei die Verarbeitungseinrichtung einen Speicher zum Speichern eines Steuerprogramms zum Erzeugen der Dimensionsdaten und eine Steuerung aufweist,
wobei die Steuerung das Steuerprogramm ausführt,
um das Distanzbild des zu vermessenden Objekts zu erfassen, wobei das von der Kamera erzeugte Distanzbild durch Punktgruppendaten wiedergegeben wird, die Positionen entsprechender Pixel in einem dreidimensionalen XYZ-Koordinatenraum beinhalten, so dass das Distanzbild ein XYZ-Koordinatenbild ist,
**dadurch gekennzeichnet, dass** die Steuerung das Steuerprogramm ferner ausführt,
um das erfasste Distanzbild in ein X-Koordinatenbild, ein Y-Koordinatenbild und ein Z-Koordinatenbild zu teilen,
um Koordinatenpunkte zu entfernen, die entsprechend in dem X-Koordinatenbild, dem Y-Koordinatenbild und dem Z-Koordinatenbild der Teilung nicht einer Referenzfläche des zu vermessenden Objekts entsprechen, um ein X-Koordinatenbild der Referenzfläche, ein Y-Koordinatenbild der Referenzfläche und ein Z-Koordinatenbild der Referenzfläche zu erzeugen, und
um basierend auf den entsprechenden erzeugten Koordinatenbildern der Referenzfläche die Dimensionsdaten zu erzeugen, welche die Länge, die Breite und die Höhe des zu vermessenden Objekts angeben,
wobei die Steuerung eine X-Koordinatenbildverarbeitung durchführt, die X-Koordinatenpunkte aus dem X-Koordinatenbild der Teilung in einem Bereich entfernt, der nicht der Referenzfläche entspricht, um das X-Koordinatenbild der Referenzfläche zu erzeugen,
die Steuerung eine Y-Koordinatenbildverarbeitung durchführt, die Y-Koordinatenpunkte aus dem Y-Koordinatenbild der Teilung in einem Bereich entfernt, der nicht der Referenzfläche entspricht, um das Y-Koordinatenbild der Referenzfläche zu erzeugen, und
die Steuerung eine Z-Koordinatenbildverarbeitung durchführt, die Z-Koordinatenpunkte aus dem Z-Koordinatenbild der Teilung in einem Bereich entfernt, der nicht der Referenzfläche entspricht, um das Z-Koordinatenbild der Referenzfläche zu erzeugen.

2. Dimensionsmessvorrichtung nach Anspruch 1, wobei die Steuerung die Pixelposition eines Koordinatenpunktes, der in der X-Koordinatenbildverarbeitung oder der Y-Koordinatenbildverarbeitung oder der Z-Koordinatenbildverarbeitung entfernt wurden, aus den anderen zwei Koordinatenbildern entfernt und dadurch bewirkt, dass die Pixelposition nicht den anderen zwei Koordinatenbildverarbeitungen unterzogen wird.

3. Dimensionsmessvorrichtung nach Anspruch 1 oder 2, wobei die Steuerung die Dimensionsdaten, welche die Höhe des zu vermessenden Objekts angeben, basierend auf einem Histogramm eines Z-Koordinatenwerts erzeugt, das auf dem Z-Koordinatenbild der Referenzfläche basiert.

4. Dimensionsmessvorrichtung nach einem der Ansprüche 1 bis 3, ferner Folgendes umfassend:
eine Gewichtsmesseinrichtung (24), die dafür konfiguriert ist, ein Gewicht des zu vermessenden Objekts zu messen, um Gewichtsdaten zu erzeugen,
wobei die Steuerung die Gewichtsdaten des zu vermessenden Objekts eingibt, die durch die Gewichtsmesseinrichtung erzeugt wurden, und basierend auf den Dimensionsdaten und den Gewichtsdaten des zu vermessenden Objekts eine Fracht des zu vermessenden Objekts berechnet.

5. Verfahren zum Steuern einer Dimensionsmessvorrichtung (10), die eine Kamera (22) aufweist, welche ein zu vermessendes Objekt fotografiert, um ein Distanzbild des zu vermessenden Objekts zu erzeugen, Folgendes umfassend:
Erfassen des Distanzbildes des zu vermessenden Objekts, das durch die Kamera erzeugt wurde, wobei das von der Kamera erzeugte Distanzbild durch Punktgruppendaten wiedergegeben wird, die Positionen entsprechender Pixel in einem dreidimensionalen XYZ-Koordinatenraum beinhalten, so dass das Distanzbild ein XYZ-Koordinatenbild ist,
**gekennzeichnet durch**:
Teilen des erfassten Distanzbildes in ein X-Koordinatenbild, ein Y-Koordinatenbild und ein Z-Koordinatenbild,
Entfernen von Koordinatenpunkten, die entsprechend in dem X-Koordinatenbild, dem Y-Koordinatenbild und dem Z-Koordinatenbild der Teilung nicht einer Referenzfläche des zu vermessenden Objekts entsprechen, wodurch ein X-Koordinatenbild der Referenzfläche, ein Y-Koordinatenbild der Referenzfläche und ein Z-Koordinatenbild der Referenzfläche erzeugt werden, und
Erzeugen von Dimensionsdaten, die basierend auf den entsprechenden erzeugten Koordinatenbildern der Referenzfläche die Länge, die Breite und die Höhe des zu vermessenden Objekts angeben,
wobei das Erzeugen des X-Koordinatenbildes der Referenzfläche das Durchführen einer X-Koordinatenbildverarbeitung beinhaltet, die X-Koordinatenpunkte aus dem X-Koordinatenbild der Teilung in einem Bereich entfernt, der nicht der Referenzfläche entspricht, um das X-Koordinatenbild der Referenzfläche zu erzeugen,
das Erzeugen des Y-Koordinatenbildes der Referenzfläche das Durchführen einer Y-Koordinatenbildverarbeitung beinhaltet, die Y-Koordinatenpunkte aus dem Y-Koordinatenbild der Teilung in einem Bereich entfernt, der nicht der Referenzfläche entspricht, um das Y-Koordinatenbild der Referenzfläche zu erzeugen, und
das Erzeugen des Z-Koordinatenbildes der Referenzfläche das Durchführen einer Z-Koordinatenbildverarbeitung beinhaltet, die Koordinatenpunkte aus dem Z-Koordinatenbild der Teilung in einem Bereich entfernt, der nicht der Referenzfläche entspricht, um das Z-Koordinatenbild der Referenzfläche zu erzeugen.

6. Verfahren zum Steuern einer Dimensionsmessvorrichtung nach Anspruch 5, wobei das Erzeugen jedes der Koordinatenbilder der Referenzfläche das Entfernen der Pixelposition eines Koordinatenpunktes, der in der X-Koordinatenbildverarbeitung oder der Y-Koordinatenbildverarbeitung oder der Z-Koordinatenbildverarbeitung entfernt wurde, aus den anderen zwei Koordinatenbildern und dadurch das Bewirken, dass die Pixelposition nicht den anderen zwei Koordinatenbildverarbeitungen unterzogen wird, beinhaltet.

7. Verfahren zum Steuern einer Dimensionsmessvorrichtung nach Anspruch 5 oder 6, wobei das Erzeugen der Dimensionsdaten das Erzeugen der Dimensionsdaten, welche die Höhe des zu vermessenden Objekts angeben, basierend auf einem Histogramm eines Z-Koordinatenwerts, das auf dem Z-Koordinatenbild der Referenzfläche basiert, beinhaltet.

8. Verfahren zum Steuern einer Dimensionsmessvorrichtung nach einem der Ansprüche 5 bis 7, ferner Folgendes umfassend:
Eingeben von Gewichtsdaten des zu vermessenden Objekts, die durch eine Gewichtsmesseinrichtung (24) zum Messen eines Gewichts des zu vermessenden Objekts erzeugt wurden, und
Berechnen einer Fracht des zu vermessenden Objekts, basierend auf den Dimensionsdaten und den Gewichtsdaten des zu vermessenden Objekts.

## Revendications

1. Appareil de mesure de dimensions (10), comprenant :
une caméra (22) configurée de manière à photographier un objet à mesurer afin de générer une image de distance de l'objet à mesurer ; et
un dispositif de traitement (20) configuré de manière à générer des données de dimensions indiquant une longueur, une largeur et une hauteur de l'objet à mesurer, sur la base de l'image de distance générée par la caméra ;
le dispositif de traitement présentant une mémoire destinée à stocker un programme de commande permettant de générer les données de dimensions, et un contrôleur ;
le contrôleur exécutant le programme de commande :
pour acquérir l'image de distance de l'objet à mesurer, moyennant quoi l'image de distance générée par la caméra est exprimée par des données de groupe de points incluant des positions de pixels respectifs dans un espace de coordonnées XYZ tridimensionnel, de sorte que l'image de distance est une image de coordonnées XYZ ;
**caractérisé en ce que** le contrôleur exécute en outre le programme de commande :
pour diviser l'image de distance acquise en une image de coordonnée X, une image de coordonnée Y, et une image de coordonnée Z ;
pour supprimer des points de coordonnées ne correspondant pas à une surface de référence de l'objet à mesurer, dans l'image de coordonnée X, l'image de coordonnée Y et l'image de coordonnée Z divisées respectives ;
pour générer une image de coordonnée X de la surface de référence, une image de coordonnée Y de la surface de référence, et une image de coordonnée Z de la surface de référence ; et
pour générer les données de dimensions indiquant la longueur, la largeur, et la hauteur de l'objet à mesurer, sur la base des images de coordonnées générées respectives de la surface de référence ;
moyennant quoi le contrôleur met en œuvre un traitement d'image de coordonnée X qui supprime des points de coordonnées X, dans une plage ne correspondant pas à la surface de référence, à partir de l'image de coordonnée X divisée, en vue de générer l'image de coordonnée X de la surface de référence ;
le contrôleur met en œuvre un traitement d'image de coordonnée Y qui supprime des points de coordonnées Y, dans une plage ne correspondant pas à la surface de référence, à partir de l'image de coordonnée Y divisée, en vue de générer l'image de coordonnée Y de la surface de référence ; et
le contrôleur met en œuvre un traitement d'image de coordonnée Z qui supprime des points de coordonnées Z, dans une plage ne correspondant pas à la surface de référence, à partir de l'image de coordonnée Z divisée, en vue de générer l'image de coordonnée Z de la surface de référence.

2. Appareil de mesure de dimensions selon la revendication 1, dans lequel le contrôleur supprime la position de pixel d'un point de coordonnées qui a été supprimé dans l'un quelconque parmi le traitement d'image de coordonnée X, le traitement d'image de coordonnée Y, et le traitement d'image de coordonnée Z, à partir des deux autres images de coordonnées, et amène par conséquent la position de pixel à ne pas être soumise aux deux autres des traitements d'image de coordonnées.

3. Appareil de mesure de dimensions selon la revendication 1 ou 2, dans lequel le contrôleur génère les données de dimensions indiquant la hauteur de l'objet à mesurer, sur la base d'un histogramme d'une valeur de coordonnée Z basée sur l'image de coordonnée Z de la surface de référence.

4. Appareil de mesure de dimensions selon l'une quelconque des revendications 1 à 3, comprenant en outre :
un dispositif de mesure de poids (24) configuré de manière à mesurer un poids de l'objet à mesurer, en vue de générer des données de poids ;
dans lequel le contrôleur applique en entrée les données de poids de l'objet à mesurer qui ont été générées par le dispositif de mesure de poids, et calcule un coût de transport de l'objet à mesurer, sur la base des données de dimensions et des données de poids de l'objet à mesurer.

5. Procédé de commande d'un appareil de mesure de dimensions (10) présentant une caméra (22) qui photographie un objet à mesurer, en vue de générer une image de distance de l'objet à mesurer, le procédé comprenant l'étape ci-dessous consistant à :
acquérir l'image de distance de l'objet à mesurer qui a été générée par la caméra, moyennant quoi l'image de distance générée par la caméra est exprimée par des données de groupe de points incluant des positions de pixels respectifs dans un espace de coordonnées XYZ tridimensionnel, de sorte que l'image de distance est une image de coordonnées XYZ ;
**caractérisé en ce que** le procédé comprend en outre les étapes ci-dessous consistant à :
diviser l'image de distance acquise en une image de coordonnée X, une image de coordonnée Y, et une image de coordonnée Z ;
supprimer des points de coordonnées ne correspondant pas à une surface de référence de l'objet à mesurer, dans l'image de coordonnée X, l'image de coordonnée Y et l'image de coordonnée Z divisées respectives, ce qui permet de générer par conséquent une image de coordonnée X de la surface de référence, une image de coordonnée Y de la surface de référence et une image de coordonnée Z de la surface de référence ; et
générer des données de dimensions indiquant une longueur, une largeur et une hauteur de l'objet à mesurer, sur la base des images de coordonnées générées respectives de la surface de référence ;
moyennant quoi l'étape de génération de l'image de coordonnée X de la surface de référence comprend l'étape consistant à mettre en œuvre un traitement d'image de coordonnée X qui supprime des points de coordonnées X, dans une plage ne correspondant pas à la surface de référence, à partir de l'image de coordonnée X divisée, en vue de générer l'image de coordonnée X de la surface de référence ;
l'étape de génération de l'image de coordonnée Y de la surface de référence comprend l'étape consistant à mettre en œuvre un traitement d'image de coordonnée Y qui supprime les points de coordonnées Y, dans une plage ne correspondant pas à la surface de référence, à partir de l'image de coordonnée Y divisée, en vue de générer l'image de coordonnée Y de la surface de référence ; et
l'étape de génération de l'image de coordonnée Z de la surface de référence comprend l'étape consistant à mettre en œuvre un traitement d'image de coordonnée Z qui supprime les points de coordonnées Z, dans une plage ne correspondant pas à la surface de référence, à partir de l'image de coordonnée Z divisée, en vue de générer l'image de coordonnée Z de la surface de référence.

6. Procédé de commande d'un appareil de mesure de dimensions selon la revendication 5, dans lequel l'étape de génération de chacune des images de coordonnées de la surface de référence inclut l'étape consistant à supprimer la position de pixel d'un point de coordonnées qui a été supprimé dans l'un quelconque parmi le traitement d'image de coordonnée X, le traitement d'image de coordonnée Y, et le traitement d'image de coordonnée Z, à partir des deux autres images de coordonnées, et l'étape consistant à amener par conséquent la position de pixel à ne pas être soumise aux deux autres des traitements d'image de coordonnées.

7. Procédé de commande d'un appareil de mesure de dimensions selon la revendication 5 ou 6, dans lequel l'étape de génération des données de dimensions consiste à générer les données de dimensions indiquant la hauteur de l'objet à mesurer, sur la base d'un histogramme d'une valeur de coordonnée Z basée sur l'image de coordonnée Z de la surface de référence.

8. Procédé de commande d'un appareil de mesure de dimensions selon l'une quelconque des revendications 5 à 7, comprenant en outre les étapes ci-dessous consistant à :
appliquer en entrée des données de poids de l'objet à mesurer qui ont été générées par un dispositif de mesure de poids (24) en vue de mesurer un poids de l'objet à mesurer ; et
calculer un coût de transport de l'objet à mesurer, sur la base des données de dimensions et des données de poids de l'objet à mesurer.
